# EUROPÄISCHE PATENTSCHRIFT

(11) **EP 4 084 961 B1**
(45) Veröffentlichungstag und Bekanntmachung des Hinweises auf die Patenterteilung: **27.08.2025**
(21) Anmeldenummer: 20830066.5
(22) Anmeldetag: 16.12.2020
(51) Int. Cl.: B42D 25/324, B42D 25/373, B42D 25/351, B42D 25/29, B42D 25/425, B42D 25/445, G02B 5/08

(54) **OPTISCH VARIABLES SICHERHEITSELEMENT**
OPTICALLY VARIABLE SECURITY ELEMENT
ÉLÉMENT DE SÉCURITÉ OPTIQUEMENT VARIABLE

(30) Priorität: 03.01.2020 DE 102020000027
(43) Veröffentlichungstag der Anmeldung: 09.11.2022
(73) Patentinhaber: Giesecke+Devrient Currency Technology GmbH, 81677 München (DE)
(72) Erfinder: FUHSE, Christian, 83624 Otterfing (DE); SATTLER, Tobias, 83607 Holzkirchen (DE); SCHERER, Kai, Hermann, 82491 Grainau (DE)
(74) Vertreter: Giesecke+Devrient IP
(86) Internationale Anmeldenummer: PCT/EP2020/025578
(87) Internationale Veröffentlichungsnummer: WO 2021/136586

(56) Entgegenhaltungen:
- EP-A1- 3 216 620
- WO-A1-2007/079851
- WO-A1-2017/011476
- WO-A1-2017/220204
- WO-A2-2019/007549

## Beschreibung

Die Erfindung betrifft ein optisch variables Sicherheitselement mit einem reflektiven Flächenbereich. Die Erfindung betritt auch einen mit einem solchen Sicherheitselement ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens oder eines Transferpatches ausgebildet sein.

Eine besondere Rolle bei der Echtheitsabsicherung spielen Sicherheitselemente mit betrachtungswinkelabhängigem Erscheinungsbild, da diese selbst mit modernsten Kopiergeräten nicht reproduziert werden können. Das optisch variable Sicherheitselement zeigt Betrachtern unter unterschiedlichen Betrachtungswinkeln beispielsweise unterschiedliche Motive oder unterschiedliche Zustände eines bewegten Motivs. Im Stand der Technik sind dabei als optisch variable Effekte beispielsweise Bewegungseffekte oder Motivkippeffekte beschrieben, die mit Hilfe von Hologrammen, Mikrolinsen oder Mikrospiegeln realisiert werden.

Es ist bekannt, verschiedene optisch variable Effekte - auch mittels unterschiedlicher Technologien - in einem Sicherheitselement zu erzeugen.

WO 2011/066991 A2 zeigt einen durch Mikrospiegel erzeugten Bewegungseffekt beim Kippen eines Sicherheitselements. Ein heller Balken bewegt sich über einen Flächenbereich. In dem Dokument wird auch vorgeschlagen, beispielsweise eine Mikrospiegelanordnung und eine Linsenanordnung nebeneinander in einem Sicherheitselement zu kombinieren. Im Flächenbereich der Linsen wird ein erstes - beispielsweise hinter dem Sicherheitselement schwebendes - Motiv sichtbar und im Bereich der Mikrospiegel beispielsweise der Bewegungseffekt sichtbar.

In einem Flächenbereich mit Mikrospiegeln können Mikrospiegel unterschiedlicher Motive ineinander verschachtelt bereitgestellt werden, insbesondere um beim Kippen einen Motivwechsel in dem Flächenbereich zu erzeugen.

WO 2019/219239 A1 schlägt einen Mikrospiegelbereich vor, in welchem ein Bewegungseffekt eines ersten Motivs mit einem zweiten Motiv kombiniert ist, das nur in einem Betrachtungswinkelbereich erkennbar ist.

Die nicht vorveröffentlichte Anmeldung DE 10 2018 005447 zeigt zwei eigenständige Reliefstrukturen auf zwei Höhenstufen.

WO 2017/220204 A1 betrifft ein Sicherheitselement mit einem Mikrospiegelraster mit einer Rasterweite p und einem Druckraster mit abweichender Rasterweite, die zueinander mit weniger als p/2 beabstandet sind. Die Raster erzeugen gemeinsame ein Motiv, wie farbiger Balken, der sich beim Kippen des Sicherheitselements bewegt. WO 2019/007549 A1 betrifft eine ähnliche Ausgestaltung, wobei einzelne Mikrospiegel einer gewölbten Mikrospiegelstruktur zufällig modifzierte Normalenvektoren aufweisen. EP 3216620 A1 betrifft ein Sicherheitselement mit Mikroreflektoren-Anordnung, wobei in einem Teilbereich die Mikroreflektoren zufällig orientiert sind und in einem anderen Bereich eine gemeinsame Grundorientierung aufweisen. WO 2007/079851 A1 beschreibt ebenfalls ein optisch variables Sicherheitselement mit Mikroreflektoren-Anordnung. WO 2017/011476 A1 betrifft ein optisches Produkt zur Darstellung eines 3D-Objektes.

Ausgehend davon liegt der Erfindung die Aufgabe zugrunde, die Fälschungssicherheit und die visuelle Attraktivität optisch variabler Sicherheitselemente weiter zu erhöhen, insbesondere sollen dabei auch optisch variable Sicherheitselemente mit zwei oder mehr unterschiedlichen Erscheinungsbildern bzw. Effekten in unterschiedlichen Farben bereitgestellt werden.

Diese Aufgabe wird durch die Merkmale des unabhängigen Anspruchs gelöst. Weiterbildungen der Erfindung sind Gegenstand der abhängigen Ansprüche.

Ein erfindungsgemäßes optisch variables Sicherheitselement ist in Anspruch 1 definiert.

Zur Erzeugung des Sicherheitsmerkmals wird die Ausrichtung der gerichteten Mikroreflektoren verwendet. Durch eine angepasste Ausrichtung der gleichen oder weiterer Mikroreflektoren kann das reflektierend sichtbare Motiv frei angepasst werden. Dennoch wird vorliegend ein Beschichtungsraster mit sichtbaren Rasterelementen verwendet. Zudem wird somit vom eher üblichen Ansatz abgewichen, ein Raster so vorzusehen, dass es nicht sichtbar ist. In den folgenden Ausgestaltungen werden unterschiedliche Vorteile des vorliegenden Ansatzes deutlich.

Das Sicherheitselement wird um eine vorgegebene Achse gekippt, wobei das Motiv des (ersten) Sicherheitsmerkmals für den Betrachter vorzugsweise in einem (ersten) Kippwinkelbereich sichtbar ist. Die vorgegebene Kippachse liegt in der Ebene des Sicherheitselements. Alle im Folgenden genannten Kippwinkel bzw. Kippwinkelabhängigkeiten betreffen das Kippen um die gleiche vorgegebene Achse.

Die Mikroreflektor-Anordnung kann neben den Mikroreflektoren des Sicherheitsmerkmals, welches als erstes Sicherheitsmerkmal bezeichnet wird, Mikroreflektoren eines zweiten Sicherheitsmerkmals sowie optional Mikroreflektoren weiterer Sicherheitsmerkmale enthalten. Das erste Motiv des ersten Sicherheitsmerkmals ist - als gerastertes Motiv - für den Betrachter unter zumindest einem Kippwinkel reflektierend sichtbar, insbesondere in einem ersten Kippwinkelbereich sichtbar.

Durch das Beschichtungsraster kann in dem Rasterbereich für den Betrachter bevorzugt auch ein Motiv eines zweiten Sicherheitsmerkmals, welches durch die Ausrichtung von Mikroreflektoren des zweiten Sicherheitsmerkmals erzeugt wird, als gerastertes Motiv sichtbar sein. Das zweite Motiv tritt für den Betrachter unter zumindest einem Kippwinkel reflektierend in Erscheinung (ist sichtbar) bzw. ist in der Regel in einem zweiten Kippwinkelbereich sichtbar. Die Mikroreflektor-Anordnung kann neben den Mikroreflektoren des ersten und des zweiten Sicherheitsmerkmals Mikroreflektoren weiterer Sicherheitsmerkmale enthalten.

Das Motiv des (ersten) Sicherheitsmerkmals und/oder ein zweites Motiv eines zweiten Sicherheitsmerkmals kann ein bewegtes Motiv sein, das außerhalb des Rasterbereiches für den Betrachter ungerastert sichtbar ist. Nur innerhalb des Rasterbereiches ist das bewegte (erste und/oder zweite) Motiv für den Betrachter als gerastertes Motiv erkennbar. Das bewegte Motiv liegt entsprechend in mindestens einem Außen-Kippwinkelteilbereich außerhalb des Rasterbereichs und ist dort ungerastert sichtbar und liegt in einem Innen-Kippwinkelteilbereich innerhalb des Rasterbereichs und ist dort gerastert sichtbar. Die Kippwinkelteilbereiche für ein erstes und ein zweites Motiv sind unabhängig voneinander. Beispielsweise können beim Kippen zunächst (und oder abschließend) beide Motive ungerastert sichtbar sein. Bevorzugt überlappen die Innen-Kippwinkelteilbereiche der beiden Motive nicht (oder nur teilweise).

Ebenso kann das Motiv als bewegtes erstes Motiv und/oder ein bewegtes zweites Motiv außerhalb des Rasterbereiches mit einem eigenen Raster sichtbar sein, welches als Ausrichtungsraster - durch gerasterte Ausrichtung der Mikroreflektoren - gestaltet ist. Vorzugsweise tritt dieses bewegte Motiv mit eigenem Raster in dem Rasterbereich als doppelt gerastertes Motiv in Erscheinung. Das bewegte Motiv liegt entsprechend in mindestens einem Außen-Kippwinkelteilbereich außerhalb des Rasterbereichs und ist dort gerastert sichtbar und liegt in einem Innen-Kippwinkelteilbereich innerhalb des Rasterbereichs und ist dort doppelt gerastert sichtbar. Die Kippwinkelteilbereiche für das erste und das zweite Motiv sind wiederum unabhängig voneinander. Beispielsweise können beim Kippen zunächst (und oder abschließend) beide Motive gerastert sichtbar sein. Bevorzugt überlappen die Innen-Kippwinkelteilbereiche der beiden Motive nicht (oder nur teilweise).

Kombinationen mit einem ersten außerhalb des Rasterbereiches gerastert sichtbaren Motiv und einem zweiten außerhalb des Rasterbereiches ungerastert sichtbaren Motiv sind denkbar. Ferner gilt für ein bewegtes zweites Motiv (im Außenbereich gerastert oder ungerastert), dass das zweite Motiv nicht vollständig im Rasterbereich liegen muss. Zumindest ein Teil des zweiten Motivs bleibt (stets) außerhalb des Rasterbereichs. In einem Innen-Kippwinkelteilbereich liegt nur ein Teil des zweiten Motivs innerhalb des Rasterbereichs und ist dort (ggf. doppelt) gerastert sichtbar. Ein anderer Teil des zweiten Motivs liegt auch für Kippwinkel des Innen-Kippwinkelteilbereichs außerhalb des Rasterbereichs.

In denkbaren Varianten liegen die Mikroreflektoren der beiden Sicherheitsmerkmale in getrennten Teilbereichen des Rasterbereichs. Mit besonderem Vorteil sind jedoch zumindest in dem Rasterbereich Mikroreflektoren eines zweiten Motivs eines zweiten Sicherheitsmerkmals mit den ersten Mikroreflektoren des ersten Sicherheitsmerkmals - in Aufsicht betrachtet - verschachtelt angeordnet. Die Mikroreflektoren der beiden Sicherheitsmerkmale liegen dann in teilweise (oder vollständig) überlappenden Teilbereichen des Rasterbereichs. Somit ist das Sicherheitselement hinsichtlich seiner Fläche optimiert.

Besonders bevorzugt kreuzen sich in dem Rasterbereich Rasterlinien oder Rasterstreifen des Beschichtungsrasters
mit zweiten Rasterlinien oder -streifen eines zweiten Rasters oder
mit einer Konturlinie eines linienartigen ersten oder zweiten Motivs. Sie kreuzen sich in einem Winkel zwischen 30 und 150 Grad, vorzugsweise mit einem Winkel zwischen 60 und 120 Grad, weiter bevorzugt nahezu senkrecht aber insbesondere nicht genau senkrecht.

In besonders bevorzugten Ausgestaltungen wird ein Sicherheitsmerkmal mit einem bewegten (erstes oder zweites) Motiv mit einem Sicherheitsmerkmal mit einem unbewegten (statischen) Motiv kombiniert. Das Motiv des ersten Sicherheitsmerkmals kann ein bewegtes Motiv sein, welches - kippwinkelabhängig gleichzeitig oder nacheinander - in dem Rasterbereich mit einem unbewegten Motiv oder mit einem nur kippwinkelabhängig sichtbaren Motiv eines zweiten Sicherheitsmerkmals sichtbar ist. Ebenso kann das Motiv des ersten Sicherheitsmerkmals ein unbewegtes Motiv sein, welches - kippwinkelabhängig gleichzeitig oder nacheinander - in dem Rasterbereich mit einem bewegten Motiv oder mit einem nur kippwinkelabhängig sichtbaren Motiv eines zweiten Sicherheitsmerkmals sichtbar ist.

Mit Vorteil wird hier ein Sicherheitselement bereitgestellt, dass einerseits einen für den Betrachter schnell erkennbaren Bewegungseffekt über einen größeren Bereich zeigt. Der Betrachter muss das Sicherheitsmerkmal nicht lange suchen, da es über einen großen Bereich erkennbar ist.

Als bevorzugte statische bzw. unbewegte Motive werden dabei dreidimensional wirkende Motive betrachtet. Die Mikroreflektoren des Sicherheitsmerkmals sind so ausgerichtet, dass das statische Motiv für den Betrachter beispielsweise eine dreidimensional Oberfläche ist oder ein relativ über oder unter der Ebene des Sicherheitselements schwebendes Motiv ist. Die Mikroreflektoren (-spiegel) erzeugen für den Betrachter kippwinkelabhängig unterschiedliche Perspektiven des dreidimensionalen Motivs. Eine an die Perspektive angepasste Darstellung wird dabei weiterhin als statisch betrachtet, auch wenn das Motiv für den Betrachter aufgrund der geänderten Perspektive (Kippwinkel) leicht verschoben liegt.

Die Sicherheitsmerkmale haben - unabhängig davon ob sie als flächiges Motiv oder als linienförmiges Motiv dargestellt sind - eine (Außen-)Kontur vorzugsweise in Form eines Hell-Dunkel-Überganges. Das Motiv der Sicherheitsmerkmale entsteht kippwinkelabhängig durch die vorhandene oder nicht vorhandene gerichtete Reflektion an den Mikroreflektoren. Für den Betrachter tritt das Sicherheitsmerkmal also hell reflektierend, vorzugsweise farblich hell reflektierend, in Erscheinung. Der angrenzende Bereich oder Umgebungsbereich ist dagegen dunkel, insbesondere da die Mikroreflektoren in andere Richtungen ausgerichtet sind.

Die Mikroreflektoren sind parallel zu (oder in) der Ebene des Sicherheitselements angeordnet. Der Bewegungseffekt eines Sicherheitsmerkmals verläuft ebenfalls parallel zu bzw. in der Ebene des Sicherheitselements. Die Ausrichtung der Mikroreflektoren kann durch einen Neigungswinkel und einen Azimutwinkel angegeben werden, wie sie in der bevorzugten Ausgestaltung von Mikrospiegeln als Mikroreflektoren vorliegen. Der Neigungswinkel des Mikroreflektors gegenüber der Ebene des Sicherheitselements ist für das Kippen um eine vorgegeben Achse der entscheidende Parameter. Vereinfacht wirken beim Kippen nur die Mikroreflektoren, deren Azimutwinkel in Richtung des Betrachters liegen.

In der Regel sind in dem Rasterbereich in jedem Rasterelement eine Vielzahl von Pixeln angeordnet, mit einer Pixelgröße die für den Betrachter nicht erkennbar ist und mit mindestens zwei Mikroreflektoren pro Pixel. Nicht nur der Rasterbereich, sondern die Mikroreflektor-Anordnung kann entsprechend in Pixel aufgeteilt sein. In einem Pixel können (insbesondere in dem Rasterbereich) Mikroreflektoren unterschiedlicher Sicherheitsmerkmale enthalten sein, also insbesondere erste und zweite Mikroreflektoren. Zudem oder alternativ können Pixel auch mehrere gleichartige Mikroreflektoren enthalten. Die Helligkeit eines Pixels für einen Kippwinkel kann beispielsweise durch mehrere gleichartig ausgerichtete Mikroreflektoren erhöht werden.

Das Beschichtungsraster umfasst in der Regel eine reflektionserhöhende, inbesondere opake, Schicht. Die reflektionserhöhende Schicht der Mikroreflektoren-Anordnung wird in bevorzugten Ausgestaltungen in dem Rasterbereich nur gerastert, also in den Rasterelementen bereitgestellt. Die Rasterelemente haben erfindungsgemäß eine Rasterelementgröße zwischen 100µm und 3mm, und vorzugsweise von 200 µm bis 1mm. Bevorzugt sind die Rasterelemente Rasterlinien oder Rasterstreifen. Die Rasterzwischenräume können insbesondere anders beschichtet sein oder unbeschichtet sein.

Das Motiv tritt für den Betrachter reflektierend in Erscheinung, wenn das Licht der Mikroreflektoren bei dem Kippwinkel zum Betrachter reflektiert wird. Nun ist es besonders bevorzugt, dass die Motive des ersten Sicherheitsmerkmal und des zweiten Sicherheitsmerkmals für den Betrachter mit unterschiedlicher Farbwirkung in Erscheinung treten (sichtbar sind).

Mit besonderem Vorteil liegen die Mikroreflektoren des ersten und zweiten Sicherheitsmerkmals auf unterschiedlichen Höhenstufen vor. Die Rasterelemente sind vorzugsweise in den Mikroreflektoren der oberen Höhenstufe ausgebildet. Wenn das Sicherheitselement eine Ebene definiert, liegen die Mikroreflektoren auf unterschiedlichen Höhenstufen - gemessen senkrecht zu der Ebene. Die Ausgestaltung unterstützt die leichtere Erstellung des Beschichtungsrasters und gegebenenfalls eine leichtere unterschiedliche farbliche Gestaltung der Motive.

Das Motiv des ersten Sicherheitsmerkmals sieht der Betrachter in einer ersten Farbe. Das Motiv des zweiten Sicherheitsmerkmals sieht der Betrachter dagegen in einer (anderen) zweiten Farbe. Die Farbe des Motivs ist vorzugsweise kippwinkelunabhängig. Das Motiv (der Sicherheitsmerkmale) zeigt die genannte Farbe (jeweils) in seinem Kippwinkelbereich. Soweit in der vorliegenden Anmeldung vereinfacht von Farbe bzw. unterschiedlicher Farbe gesprochen wird, sind Farbtöne bzw. unterschiedliche Farbtöne gemeint (also keine ggf. unterschiedlichen Helligkeitswerte).

Die Mikroreflektoren-Anordnung kann zwei Teilreliefstrukturen auf unterschiedlichen Höhenstufen in einer Reliefstruktur umfassen, oder zwei eigenständige Reliefstrukturen auf unterschiedlichen Höhenstufen umfassen.

In der ersten Variante liegen die Mikroreflektoren beider Sicherheitsmerkmale als Teilreliefstrukturen auf unterschiedlichen Höhenstufen in einer gemeinsamen Reliefstruktur, die also insbesondere mit nur einem Prägeschritt erzeugt werden kann. Auf der höher liegenden Teilreliefstruktur kann eine Beschichtung beispielsweise selektiv übertragen (von einer Donorfolie) nach Kontakt), abgehoben (auf eine Akzeptorfolie) oder weggewischt werden. Zuvor oder danach werden beide Teilreliefstrukturen gemeinsam mit einer, beispielsweise der reflektionserhöhenden (vorab) oder einer zweiten farbgebenden (danach), Beschichtung versehen. Die Mikroreflektoren auf den unterschiedlichen Höhenstufen umfassen somit eine unterschiedliche Beschichtung, die jeweils eine reflektionserhöhende Teilschicht und/oder eine farbgebende Teilschicht enthält.

In der bevorzugten zweiten Variante liegen die Mikroreflektoren der beiden Sicherheitsmerkmale als eigenständige Reliefstrukturen auf unterschiedlichen Höhenstufen. Das Sicherheitselement umfasst somit einer erste Reliefstruktur mit den Mikroreflektoren des ersten Sicherheitsmerkmals und eine separate zweite Reliefstruktur auf einer anderen Höhenstufe mit den Mikroreflektoren des zweiten Sicherheitsmerkmals. Beide Reliefstrukturen können in getrennten Prägeschritten erzeugt werden, beispielsweise auch auf unterschiedlichen Seiten eines Trägers. Die Mikroreflektoren auf den unterschiedlichen Höhenstufen umfassen somit leichter eine unterschiedliche Beschichtung, die jeweils eine reflektionserhöhende Teilschicht und/oder eine farbgebende Teilschicht enthält.

Die Reliefstrukturen werden hier bevorzugt durch Prägen einer, bevorzugt transparenten, Schicht, insbesondere einer Prägelackschicht, vorzugsweise UV-härtend, oder einer thermoplastischen Trägerschicht erzeugt.

Für eine unterschiedlich farbige Gestaltung der Motive der Sicherheitsmerkmale sind verschiedene Ansätze denkbar. Über einer - insbesondere opaken - reflektionserhöhenden Beschichtung der Mikroreflektoren des ersten und/oder des zweiten Sicherheitsmerkmals kann eine entsprechende erste bzw. zweite farbgebende Schicht, insbesondere eine lasierende Farbschicht, vorliegen. Alternativ oder für das andere Sicherheitsmerkmal kann die - insbesondere opake - reflektionserhöhende Schicht der Mikroreflektoren eine farbgebende Subwellenlängenstruktur umfassen und/oder eine Eigenfarbe aufweisen. Nur weiter alternativ wird die Farbe mittels einer diffraktiven Struktur erzeugt.

Das Anordnen der Mikroreflektoren auf unterschiedlichen Höhenstufen ermöglicht eine einfachere unterschiedliche Beschichtung der ineinander verschachtelten unterschiedlichen Mikroreflektoren. Parallel zur Ebene des Sicherheitselements liegen somit die Mikroreflektoren auf einer ersten und auf einer zweiten Höhenstufe. Senkrecht zur Ebene des Sicherheitselements liegen die unterschiedlichen Höhen vor. Der Höhenunterschied der beiden Höhenstufen ist größer als eine maximale Reliefhöhe der Mikroreflektoren, insbesondere mindestens 1,5 mal oder doppelt so groß wie die maximale Reliefhöhe (bzw. Ganghöhe). Die Flächenausdehnung des Sicherheitselements definiert eine auf der Fläche senkrecht stehende z-Richtung. Das Sicherheitselement enthält die zwei Reliefstrukturen, die in z-Richtung in unterschiedlichen Höhenstufen angeordnet sind. Die Reliefstrukturen sind jeweils mit einer Farbbeschichtung versehen sind, die einen unterschiedlichen Farbeindruck erzeugen. Die Reliefstrukturen sind vorteilhaft jeweils durch eine maximale Ganghöhe charakterisiert, wobei der Abstand benachbarter Höhenstufen in z-Richtung größer als die maximale Ganghöhe des jeweils tiefer liegenden Prägestrukturbereichs ist. Vorzugsweise ist der Abstand größer als 150%, besonders bevorzugt 200%, der maximalen Ganghöhe. Weiter bevorzugt liegt der Abstand benachbarter Höhenstufen in z-Richtung zwischen 150% und 750%, besonders bevorzugt zwischen 200% und 500%, weiter bevorzugt zwischen 200% und 400% der maximalen Ganghöhe des tiefer liegenden Prägestrukturbereichs.

Die Mikroreflektoren weisen vorzugsweise eine Größe zwischen 1 bis 100 µm auf, weiter bevorzugt zwischen 5 bis 30 µm. Die Mikroreflektoren sind beispielsweise gebildet durch Mikrospiegel mit einer gerichteten, vorzugsweise planen, Oberfläche. Die Ausrichtung eines Mikrospiegel wird regelmäßig durch Neigungswinkel und Azimutwinkel beschrieben und soll daher auch allgemein für Mikroreflektoren hier so beschrieben werden. Die Mikroreflektoren können ebenso - in weniger lichtstarken Ausgestaltungen - durch eine gerichtet reflektierende Fresnelstruktur, durch eine Beugungsstruktur oder durch eine Subwellenlängenstruktur gebildet sein.

Die Mikroreflektoren werden bevorzugt als Mikrospiegel realisiert, insbesondere da sie eine besonders helle und achromatische Lichtreflektion zeigen. Mikrospiegel reflektieren einfallendes Licht im Wesentlichen nach den Regeln der geometrischen Optik. Mikrospiegel können als plane Facetten gestaltet sein. Sie sollten so klein sein, dass sie mit dem unbewaffneten Auge kaum oder gar nicht mehr einzeln aufgelöst werden können. Die Größe der Mikrospiegel (laterale Abmessungen) liegt unterhalb von 100 µm. Am unteren Ende der Größen sollen die lateralen Abmessungen zur Vermeidung unerwünschter Beugungseffekte größer als 3 µm, bevorzugt größer als 5 µm und besonders bevorzugt etwa 10 µm groß oder größer sein.

Neben der bevorzugten Ausführung als Mikrospiegel können als Mikroreflektoren aber auch andere reflektierende Mikro- oder Nanostrukturen verwendet werden. Beispielsweise können insbesondere auch Beugungsstrukturen verwendet werden (z.B. Hologrammgitter mit Perioden von ca. 0,6 µm bis 2 µm, zur Erzeugung definierter Farben bevorzugt achromatische "Mattstrukturen" oder asymmetrische "Blaze-Gitter") oder Subwellenlängenstrukturen. Alle genannten Mikroreflektor-Typen können mittels Reliefstrukturen erzeugt werden. Die Mikroreflektoren werden bevorzugt in einen Prägelack eingeprägt (z.B. thermoplastischer oder strahlungshärtender, insbesondere UV-härtender Prägelack) und mit einer reflektionserhöhenden Beschichtung versehen (insbesondere z.B. mit einer stark reflektierenden opaken Metallisierung).

Das Motiv des ersten oder eines weiteren Sicherheitsmerkmals, das durch die Ausrichtung der Mikroreflektoren in der Mikroreflektoren-Anordnung erzeugt wird, kann eine motivinterne Bewegung umfassen, die vorzugsweise senkrecht zur Motivkontur und/oder in Richtung der Rasterlinien bzw. Rasterstreifen verläuft. Eine motivinterne Bewegung, also eine Bewegung innerhalb eines in einem Kippwinkelbereich sichtbaren Motivs, ist beispielsweise erzielbar durch einen bewegten helleren Untermotiv, wie Fleck oder Streifen, im Motiv. So kann insbesondere das Motiv mit einem gerichteten Mikroreflektor pro Pixel dargestellt werden, das bewegte hellere Untermotiv mit mindestens drei gleichgerichteten Mikroreflektoren pro Pixel dargestellt werden.

In den bevorzugten Gestaltungen ist das Beschichtungsraster ein lineares Raster bzw. Linienraster, oder ein regelmäßiges Raster aus gleichartigen beschichteten Rasterelementen ist, die bevorzugt als eigenes Rasterelement-Untermotiv erkennbar sind, oder ein regelmäßiges Raster aus beschichteten Rasterstreifen ist, die eine gleichartige Außenkontur als Rasterstreifen-Untermotiv aufweisen.

Das Sicherheitselement kann in ein Wertdokumentsubstrat eingebracht werden oder auf das Wertdokumentsubstrat aufgebracht werden. Das Sicherheitselement ist vorgesehen zur Einbettung in oder Aufbringung auf ein Substrat, wie Folie, Papier oder Verbund daraus, insbesondere eines Wertdokuments, eines Ausweises oder eines Markenproduktes. Das Sicherheitselement kann beispielsweise als Sicherheitsfaden, Sicherheitsstreifen, Sicherheitspatch oder Sicherheitsschicht, insbesondere für Wertdokumente aber auch zur Absicherung von Markenartikeln oder Produkten bereitgestellt werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit zwei Sicherheitselementen,
- Fig. 2: vier Ansichten eines Sicherheitselements bei verschiedenen Kippwinkeln,
- Fig. 3: eine regelmäßige Mikroreflektoren-Anordnung in Aufsicht,
- Fig. 4: eine unregelmäßige Mikroreflektoren-Anordnung in Aufsicht,
- Fig. 5: Querschnitt durch eine erste Ausgestaltung einer Mikroreflektoren-Anordnung,
- Fig. 6: Querschnitt durch eine zweite Ausgestaltung einer Mikroreflektoren-Anordnung mit Teilreliefstrukturen auf unterschiedlichen Höhestufen,
- Fig. 7: Querschnitt durch eine dritte Ausgestaltung einer Mikroreflektoren-Anordnung mit zwei getrennten Reliefstrukturen auf unterschiedlichen Höhestufen,
- Fig. 8: Querschnitt durch eine vierte Ausgestaltung einer Mikroreflektoren-Anordnung mit zwei getrennten Reliefstrukturen auf unterschiedlichen Höhestufen,
- Fig. 9: ein weiteres Sicherheitselement mit mehreren Sicherheitsmerkmalen in Aufsicht bei einem Kippwinkel.

Die Erfindung wird nun am Beispiel von Sicherheitselementen für Banknoten erläutert.

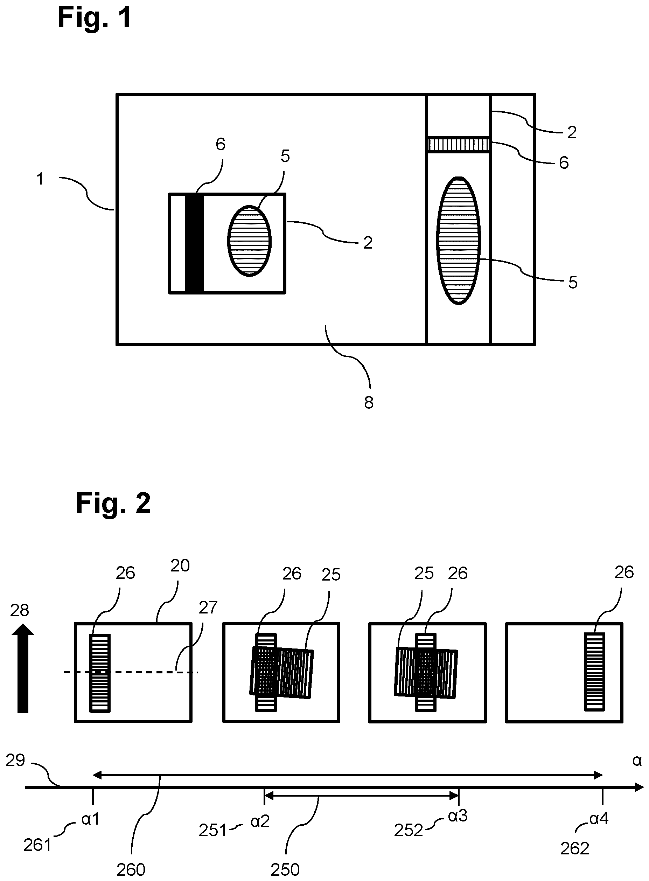

Figur 1 zeigt eine schematische Darstellung einer Banknote 1 mit zwei erfindungsgemäßen optisch variablen Sicherheitselementen 2. In dieser Ausgestaltung sind beide Sicherheitselemente, als Patch und als Streifen, auf das Substrat 8 der Banknote 1 aufgebracht.

Es versteht sich allerdings, dass die Erfindung nicht auf Transferelemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Transferelementen (wie Patch mit oder ohne eigene Trägerschicht) beispielsweise auch eingebettete Sicherheitselemente, wie Sicherheitsfäden oder Sicherheitsschichten als teil- oder vollflächige Teilschicht des Substrats, in Betracht.

Die Sicherheitselemente 2 umfassen jeweils zwei Sicherheitsmerkmale 5, 6, deren Motive in der Figur für einen bestimmten Kippwinkel der Banknote dargestellt sind. Die beiden Motive der Sicherheitsmerkmale werden durch eine gemeinsame Mikroreflektor-Anordnung kippwinkelabhängig erzeugt. Das gerasterte, ovale Motiv des ersten Sicherheitsmerkmals 5 ist statisch und nur in einem bestimmten Kippwinkelbereich sichtbar. Das Motiv des zweiten Sicherheitsmerkmals 6 bewegt sich dagegen beim Kippen der Banknote 1 über das Sicherheitselement 2. Es bewegt sich auf dem Patch als Sicherheitselement 2 von links nach rechts und auch über den ovalen Bereich hinweg. Im ovalen Bereich (Rasterbereich) liegen also Mikroreflektoren (bzw. - spiegel) beider Sicherheitsmerkmale ineinander verschachtelt vor, um beide Motive darstellen zu können. Vorliegend ist das ovale Motiv 5 so gerastert, dass der Betrachter die Rasterelemente sieht und das Motiv als gerastertes Motiv sieht. In den Zwischenräumen der Rasterelemente liegen im ovalen Bereich die Mikroreflektoren (bzw. -spiegel) des zweiten Sicherheitsmerkmals 6. Bei entsprechendem Kippwinkel ist auch das Motiv des zweiten Sicherheitsmerkmals 6, welches für den Betrachter außerhalb des Rasterbereiches ungerastert erscheint bzw. ist, im Rasterbereich als gerastertes Motiv sichtbar. Die Motive der beiden Sicherheitsmerkmale sind bevorzugt unterschiedlich farbig, insbesondere für den Betrachter in einer ersten respektive zweiten Farbe sichtbar. Natürlich könnten die Motive auch in Form und/oder Farbe übereinstimmen.

Auf dem Sicherheitsstreifen als dem zweiten Sicherheitselement 2 auf der Banknote 1 bewegt sich das Motiv des zweiten Sicherheitsmerkmals 6 für den gleichen Kippvorgang von oben nach unten (rechte Bildhälfte). Auf der Banknote 1 liegen also zwei Sicherheitselemente 2 mit unterschiedlichen Bewegungsrichtungen vor. Angedeutet ist in dem zweiten Sicherheitselement, dass das Motiv des zweiten Sicherheitsmerkmals 6 für den Betrachter auch bereits außerhalb des Rasterbereiches als gerastertes Motiv sichtbar sein kann.

Ein Verhalten der Sicherheitsmerkmale mit zwei gerasterten Motiven auf dem Sicherheitselement bei einem Kippen wird nun mit Bezug auf Figur 2 näher beschrieben.

Ein Sicherheitselement 20 ist in Fig. 2 für vier verschiedene Kippwinkel dargestellt. Das Sicherheitselement 20 wird um eine vorgegebene Achse 27 gekippt. Die Achse 27 liegt in der Ebene des Sicherheitselements 20. Mit einem Pfeil ist eine entsprechende Kipprichtung 29 angedeutet. In diesem Beispiel könnte man auch von einem Nord-Süd-Kippen sprechen. Für den Kippwinkel α zeigt eine Skala 29 unterschiedliche Kippwinkel α₁ bis α₄. Die Kippwinkel α₁ und α₄ liegen bevorzugt symmetrisch um die senkrechte Aufsicht. In einer Notation der Kippwinkel mit 0 Grad für senkrechte Aufsicht, könnten also +/- x Grad vorliegen. Alternativ könnten die Winkel aber auch nur positive (oder negative) Werte bzw. schwerpunktmäßig positive oder negative Werte haben.

Die Motive 25, 26 treten für den Betrachter kippwinkelabhängig durch gerichtete Reflektion hell hervor. Der Hintergrund bleibt dunkel, reflektiert also kein Licht zum Betrachter. Bevorzugt sind die Motive für den Betrachter in unterschiedlichen Farben erkennbar, also beispielsweise als grünes Rechteck 25 und als roter bewegter Balken 26.

Das Motiv 25 des ersten Sicherheitsmerkmals ist nur in einem Kippwinkelbereich 250 sichtbar. Der Kippwinkelbereich 250 wird durch eine Kippwinkeluntergrenze 251 und eine Kippwinkelobergrenze 252 definiert. Außerhalb des Kippwinkelbereiches 250, also beispielsweise in der ersten, dritten und vierten Darstellung des Sicherheitselements in der Figur, ist das Motiv 25 nicht sichtbar. Das Motiv 26 des zweiten Sicherheitsmerkmals ist dagegen über einen größeren Kippwinkelbereich 260 sichtbar. Der Kippwinkelbereich 260 hat ebenfalls eine Kippwinkeluntergrenze 261 und eine kippwinkelobergrenze 262.

Das Motiv 26 ist quer gerastert, wobei die Rasterelemente, hier als Rasterlinien, in Größe und Anordnung so gewählt sind, dass sie für den Betrachter sichtbar sind. Die Rasterung des Motivs 26 ist ein Ausrichtungsraster, entsteht also durch gerasterte Ausrichtung von Mikroreflektoren. Das Motiv 25 ist längs gerastert, wobei die Rasterelemente, hier ebenfalls als Rasterlinien, in Größe und Anordnung so gewählt sind, dass sie für den Betrachter sichtbar sind. Die Rasterung des Motivs 25 ist ein Beschichtungsraster, entsteht also durch die gerasterte Beschichtung der Mikroreflektoren. Wie dargestellt stehen die Rasterlinien im Wesentlichen senkrecht zueinander jedoch nicht genau senkrecht zueinander.

Das Motiv 26 bewegt sich beim Kippen kontinuierlich über das Sicherheitselement 20. Ab der Kippwinkeluntergrenze 261 ist das Motiv links auf dem Sicherheitselement sichtbar, mit steigendem Kippwinkel wandert das Motiv 26 nach rechts. Der Betrachter sieht das Motiv 26 zunächst als quer gerasterten, roten Balken.

Der Rasterbereich mit Beschichtungsraster (des ersten Sicherheitsmerkmals) entspricht in diesem Beispiel der Fläche des Motivs 25 des ersten Sicherheitsmerkmals.

Wie in den beiden mittleren Ansichten von Fig. 2 dargestellt, ist das Motiv 26 des zweiten Sicherheitsmerkmals im Rasterbereich des ersten Sicherheitsmerkmals für den Betrachter als doppelt gerastertes Motiv sichtbar. Insbesondere durch die nicht exakt senkrechte Anordnung der Rasterlinien können im Rasterbereich Schwebungen bzw. ein Moire-Effekt auftreten. Das Motiv 26 könnte vollständig in dem Rasterbereich liegen. Im dargestellten Beispiel liegt das Motiv 26 nur teilweise in und teilweise außerhalb des Rasterbereiches.

Die Kippwinkeluntergrenze 251 des ersten Sicherheitsmerkmals ist so gewählt, dass das zweite Motiv 26 den Rasterbereich noch nicht erreicht hat. Die Kippwinkelobergrenze 252 des ersten Sicherheitsmerkmals ist so gewählt, dass das zweite Motiv 26 den Rasterbereich bereits wieder verlassen hat. Nur in einem Überlappwinkelbereich (oder Innen-Kippwinkelteilbereich) liegt das Motiv 26 innerhalb des Rasterbereiches. Der Überlappwinkelbereich liegt vorzugsweise vollständig im Kippwinkelbereich 250 des ersten Sicherheitsmerkmals.

Der Betrachter sieht im Überlappungswinkelbereich zugleich einen Teil, hier den oberen und den unteren Abschnitt des Balkens, die außerhalb des Rasterbereiches liegen, des Motivs 26 unverändert, also hier quer gerastert, und den überlappenden Teil, der innerhalb des Rasterbereiches liegt, durch das Beschichtungsraster gerastert, also hier doppelt gerastert.

Bei einer Realisierung der Mikroreflektoren durch Mikrospiegel könnten parallel zur Kippachse die Spiegel des zweiten Sicherheitsmerkmals am linken Rand des Flächenbereichs nach oben und am rechten Rand nach unten ausgerichtet sein und deren Orientierung dazwischen kontinuierlich monoton von einer Ausrichtung nach oben zu einer Ausrichtung nach unten ändern. Die Mikrospiegel des ersten Sicherheitselements könnten in den Rasterelementen des Rasterbereiches mit ausgewählten Neigungswinkeln vorliegen, die dem Kippwinkelbereich entsprechen. Beispielsweise könnten gleichmäßig über den Rasterbereich hinweg Mikrospiegel mit vier unterschiedlichen Neigungswinkeln verteilt sein, um das erste Sicherheitsmerkmal nur in seinem Kippwinkelbereich sichtbar zu machen. Die vier (oder mehr) Neigungswinkel liegen beispielsweise symmetrisch um einen zentralen Neigungswinkel, welcher dem Mittelpunkt des Kippwinkelbereiches entspricht.

Bei einer Ausführung mit anderen Strukturen als Mikrospiegeln sind entsprechend andere Strukturparameter zu ändern, welche die Betrachtungsrichtungen festlegen, unter denen diese Strukturen hell aufleuchten. So kann beispielsweise bei einer Realisierung mit Beugungsgittern je nach vorgesehener Kipp- und Beleuchtungsrichtung die Gitterperiode und/oder ein Azimutwinkel der Beugungsgitter verändert werden.

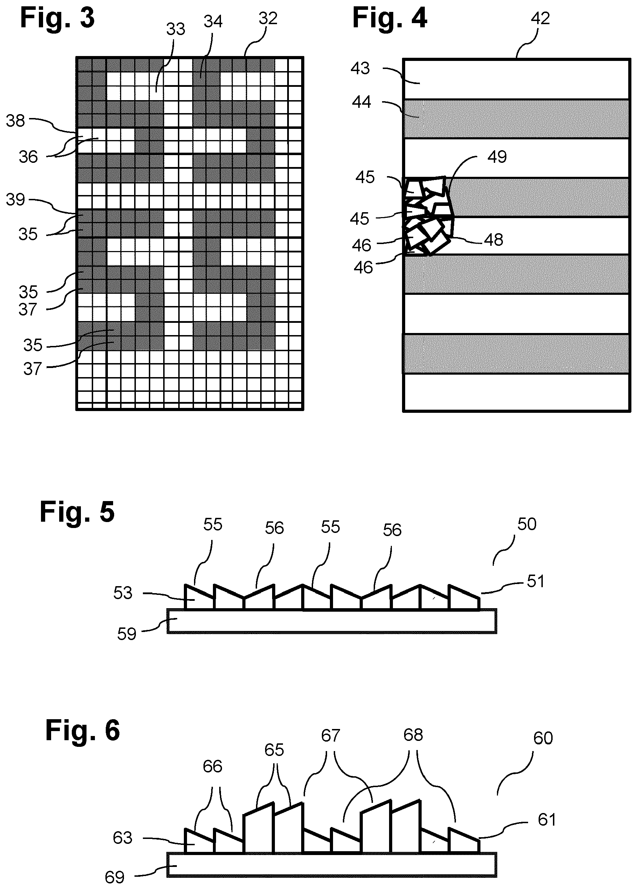

Fig. 3 und 4 zeigen jeweils in Aufsicht zwei an sich bekannte, unterschiedliche Optionen um Mikroreflektoren in einer Mikroreflektoren-Anordnung vorzusehen. Die Mikroreflektoren, beispielsweise als Mikrospiegel, können in Ihrer Ausrichtung, beispielsweise mit Neigungswinkel und Azimutwinkel, frei gewählt werden. Zusätzlich dargestellt ist das Beschichtungsraster.

In der Mikroreflektoren-Anordnung 32 der Fig. 3 sind Mikroreflektoren 35, 36, 37 einheitlicher Größe regelmäßig, in einem regelmäßigen (Mikroreflektor-)Muster, angeordnet. Innerhalb der Mikrospiegelanordnung 32 können jeweils mehrere Mikroreflektoren zu einem Pixel 38, 39 zusammengefasst sein. Gezeigt sind in der Figur Pixel 38, 39 mit zwei mal zwei Mikroreflektoren. Die Mikrospiegelanordnung ist ebenfalls regelmäßig in eine Vielzahl von Pixeln aufgeteilt (Pixelmuster). In jedem Pixel können Mikroreflektoren unterschiedlicher Sicherheitsmerkmale oder mehrere gleichartig ausgerichtete Mikroreflektoren eines Sicherheitsmerkmals vorliegen. In dem Pixel 39 liegen zwei Mikroreflektoren 35 des ersten Sicherheitsmerkmals. In dem Pixel 38 liegen zwei Mikroreflektoren 36 des zweiten Sicherheitsmerkmals. Dargestellt sind zudem Pixel mit unterschiedlichen Mikroreflektoren 35, 37 unterschiedlicher Sicherheitsmerkmale. Auch die Pixel 38, 39 können Mikroreflektoren weiterer Sicherheitsmerkmale umfassen.

Die Mikroreflektoren-Anordnung 32 weist ein Beschichtungsraster 33, 34 auf, das für den Betrachter erkennbar ist. Die beschichteten Rasterelemente 34 sind in der Figur mit einem Untermotiv, hier in Form einer fünf, ausgebildet. Der Betrachter erkennt das Untermotiv (mit dem unbewaffneten Auge). Die Beschichtung in den Rasterelementen 34 wird zumindest durch eine reflektionserhöhende, vorzugsweise opake - insbesondere opake metallische, Beschichtung gebildet. Optional ist die Beschichtung der Rasterelemente zugleich farbgebend. Der Zwischenbereich 33 (bzw. den Rasterzwischenräumen) ist frei von der Beschichtung der Rasterelemente 34. Er kann aber eine eigene andersartige Beschichtung umfassen, wie insbesondere mit Bezug auf die weiteren Figuren 5 bis 8 näher erläutert wird. Die Beschichtung der Mikroreflektoren 35, 36 kann sich beispielsweise unterscheiden in einer reflektionserhöhenden Teilschicht und/oder einer lasierenden Farbschicht.

In der Mikroreflektoren-Anordnung 42 der Fig. 4 sind Mikroreflektoren 45, 46 quasizufälliger Größe und/oder Form quasizufällig angeordnet (quasizufälliges Mikroreflektorenmuster). Pixel 48, 49 umfassen jeweils mindestens zwei, in der Regel mehr als vier, Mikroreflektoren. Die Pixel 48, 49 können in einem unregelmäßigen Pixelmuster in der Mikroreflektoren-Anordnung 42 angeordnet sein oder in einem regelmäßigen Pixelmuster angeordnet sein, welches nur durch die Ausgestaltung der einzelnen Mikroreflektoren variiert. Ebenso wie in Figur 3 sind für den Betrachter weder einzelne Mikroreflektoren noch einzelne Pixel erkennbar. In dem Pixel 49 liegen zwei erste Mikroreflektoren 45 des ersten Sicherheitsmerkmals. In dem Pixel 48 liegen zwei zweite Mikroreflektoren 46 des ersten Sicherheitsmerkmals. Wiederum können die Pixel Mikroreflektoren weiterer Sicherheitsmerkmale umfassen.

Das Beschichtungsraster 43, 44 der Mikroreflektoren-Anordnung 42 ist in diesem Fall ein Linienraster mit linienförmigen beschichteten Rasterelementen 44 und - optional anders beschichteten - Zwischenräumen 43. In Analogie zu den weiteren Ausführungsbeispielen liegen die Mikroreflektoren 45 des ersten Sicherheitsmerkmals in den beschichteten Rasterelementen 44 und die Mikroreflektoren 46 des zweiten Sicherheitsmerkmals im Wesentlichen in den Zwischenräumen 43. Die Beschichtung der Mikroreflektoren 45, 46 kann sich beispielsweise unterscheiden in einer reflektionserhöhenden Teilschicht und/oder einer lasierenden Farbschicht.

In beiden Mikroreflektoren-Anordnungen 32, 42 kann ein Pixel mehrere Mikroreflektoren eines Sicherheitsmerkmals umfassen. So kann beispielsweise die Helligkeit eines Motivs lokal unterschiedlich eingestellt werden.

Die Mikroreflektoren liegen, wie nun anhand der Fig. 5 bis 7 beschrieben wird, nicht zwingend in einer gemeinsamen Ebene (bzw. Höhenstufe), sondern bevorzugt auf unterschiedlichen Höhenstufen.

Fig. 5 zeigt im Querschnitt zunächst die einfachste Art einer Anordnung von Mikroreflektoren 55, 56 in einem Sicherheitselement 50. Auf einer Schicht 59, die eine Trägerschicht sein kann, liegt eine durchgehende geprägte Schicht 53, beispielsweise eine UV-gehärtete Prägelackschicht. Das Sicherheitselement 50 umfasst somit eine Reliefstruktur 51, in welcher die gerichteten Mikroreflektoren 55, 56 ausgebildet sind. Lediglich zur Veranschaulichung sind vertikale Trennlinien zwischen den benachbarten Mikroreflektoren dargestellt. Die Mikroreflektoren 55 des ersten Sicherheitsmerkmals und die Mikroreflektoren 56 des zweiten Sicherheitsmerkmals unterscheiden sich durch ihre Ausrichtung, hier ihrem Neigungswinkel zur Ebene des Sicherheitselements.

In der Regel ist die Mikroreflektor-Anordnung mit einer reflektionserhöhenden Schicht, wie Metallisierung oder HRI-Schicht, versehen. Ebenso oder zusätzlich kann eine farbgebende Beschichtung oder Struktur für zumindest eines der Sicherheitsmerkmale vorgesehen werden. Der Betrachter soll die Motive der beiden Sicherheitsmerkmale in unterschiedlichen Farben sehen.

Vorliegend ist nun ein - nicht figürlich dargestelltes - Beschichtungsraster vorgesehen, dessen Rasterelemente nur auf den Mikroreflektoren 55 des ersten Sicherheitsmerkmals vorliegen. Die Mikroreflektoren 56 liegen in den Rasterzwischenräumen. Die Mikroreflektoren 55 können beispielsweise mit einer opaken Metallschicht und einer lasierenden, grünen Farbschicht versehen sein. Der Betrachter sieht das gerasterte Motiv des ersten Sicherheitsmerkmals in grün hell reflektierend. Auf den Mikroreflektoren 56 kann eine HRI-Schicht oder eine opake Metallschicht (ohne Farbschicht oder ggf. mit anderer lasierender Farbschicht) vorliegen. Der Betrachter sieht das Motiv des zweiten Sicherheitsmerkmals im Rasterbereich ebenfalls gerastert, aber silbrig hell reflektierend.

Alternativ zu einer Farbschicht kann eine farbgebende Struktur - vorzugsweise zusammen mit der Reliefstruktur - erzeugt werden. Als farbgebende Struktur kann eine diffraktive Struktur oder eine Subwellenlängenstruktur dienen. Selbige sind für sich genommen hinreichend aus dem Stand der Technik bekannt. Die farbgebende Struktur ist der Reliefstruktur der Mikroreflektoren überlagert und kann ebenso das Vorliegen einer reflektionserhöhenden Schicht erfordern.

Für die Ausgestaltung nach Figur 5 ist eine selektiv unterschiedliche Beschichtung für die Mikroreflektoren der beiden Sicherheitsmerkmale jedoch sehr schwer mit hinreichender Positionsgenauigkeit umsetzbar. Die Rasterelemente des Beschichtungsrasters werden in der Regel zu oft auch teilweise auf den Reliefelementen des zweiten Sicherheitselements liegen.

Fig. 6 zeigt ein Sicherheitselement 60 mit einer (Träger-)Schicht 69 und einer Reliefschicht 63, in welcher eine Reliefstruktur 61 vorliegt. Die Reliefstruktur 61 umfasst zwei Teilreliefstrukturen 67, 68. Die Teilreliefstrukturen 67, 68 sind auf unterschiedlichen Höhenstufen - senkrecht zur Ebene des Sicherheitselements - angeordnet. Die höher liegende Teilreliefstruktur 67 umfasst die Mikroreflektoren 65 des ersten Sicherheitsmerkmals. Die tiefer liegende Teilreliefstruktur 68 umfasst die Mikroreflektoren 66 des ersten Sicherheitsmerkmals. Auf der höher liegenden Teilreliefstruktur 67 liegt das Beschichtungsraster. Die Teilreliefstruktur liegt dabei in dem Raster des Beschichtungsrasters vor. Die Rasterelemente werden in Aufsicht betrachtet also durch die Abschnitte der höher liegenden Teilreliefstruktur 67 gebildet. Betrachtet man das Beispiel der Figuren 3 oder 4, bilden die Mikroreflektoren 65 der höher liegenden Teilreliefstruktur 67 eine Fünf als Untermotiv oder eine Linie als Untermotiv des Rasterelements.

Die Teilreliefstrukturen und somit die Mikrospiegel (bzw. Reliefelemente) der beiden Sicherheitsmerkmale können nun, da sie auf unterschiedlichen Höhenstufen liegen, einfacher selektiv unterschiedlich beschichtet werden. Vorzugsweise werden beide Teilreliefstrukturen mit einer reflektionserhöhenden Beschichtung versehen. Anschließend kann nur eine Teilreliefstruktur mit einer lasierenden Farbe beschichtet werden oder können beide Teilreliefstrukturen mit unterschiedlichen lasierenden Farben versehen werden. Lasierende Farben sind vorteilhaft, da sie nicht nur semitransparent, inbesondere wellenlängenabhängig semitransparent, sondern für den Betrachter durchsichtig - abgesehen von der Farbwirkung - wirken.

Auf die höher liegende Teilreliefstruktur 67 in Fig. 6 kann in einem Kontakttransferschritt Farbe übertragen werden. Ebenso kann von der höher liegenden Teilreliefstruktur 67 eine - auf beide Teilreliefstrukturen 67, 68 aufgebrachte - Farbe weggewischt oder mittels eines Kontaktabhebeschrittes entfernt werden.

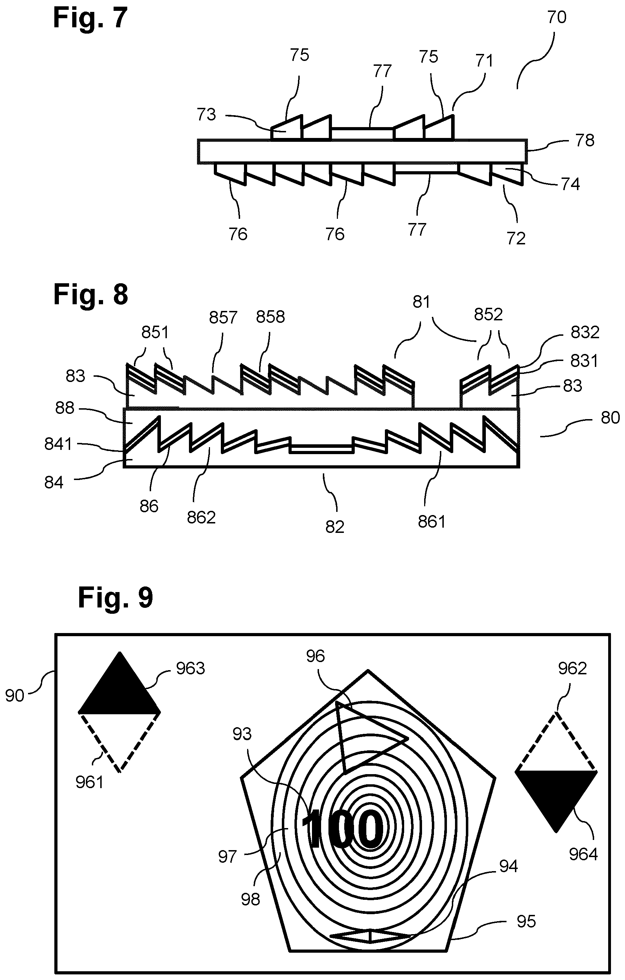

Fig. 7 zeigt ein Sicherheitselement 70 mit einer Zwischenschicht 78 und zwei unabhängigen Reliefschichten 73, 74. Für jedes der beiden Sicherheitsmerkmale ist eine eigene Reliefstruktur 71, 72 vorgesehen. Die erste Reliefstruktur 71 umfasst die Mikroreflektoren 75 des ersten Sicherheitsmerkmals. Auf der oberen Reliefstruktur liegt das Beschichtungsraster, welches zumindest eine opake reflektionserhöhende Schicht umfasst. Nur die Reliefelemente, welche die Mikroreflektoren 75 bilden, sind mit der Beschichtung versehen. In der Figur sind nur zwei Rasterelemente mit je zwei Mikroreflektoren 75 angedeutet, tatsächlich sind es natürlich mehr Rasterelemente und größere Rasterelemente. In der ersten Reliefstruktur 71 sind transparente Abschnitte 77 (oder Aussparungen in der Reliefschicht) vorgesehen. Die transparenten Abschnitte 77 können strukturiert oder unstrukturiert sein, sie sind jedoch nicht mit der reflektionserhöhenden Beschichtung versehen. Die transparenten Abschnitte 77 bilden die unbeschichteten Zwischenräume des Beschichtungsrasters. Die Größe der transparenten Abschnitte 77 liegt vorzugsweise im gleichen Bereich wie die Größe der Rasterelemente, also nur beispielsweise zwischen 80 und 1000 µm. Durch das Beschichtungsraster erzeugen die Mikrospiegel 75 des ersten Sicherheitsmerkmals für den Betrachter das erste gerasterte Motiv.

Die zweite Reliefstruktur 72 umfasst die anders ausgerichteten Mikroreflektoren 76 des zweiten Sicherheitsmerkmals. Die frei - außerhalb des Rasterbereichs - liegenden Mikroreflektoren 76 des zweiten Sicherheitsmerkmals erzeugen das zweite Motiv, beispielsweise ungerastert. Die unter den transparenten Abschnitten 77 angeordneten Mikroreflektoren 76 des zweiten Sicherheitsmerkmals liegen im Rasterbereich und erzeugen auch das zweite Motiv gerastert für den Betrachter. An Positionen, die durch Mikroreflektoren 75 der ersten Reliefstruktur 71 verdeckt sind, können in der zweiten Reliefstruktur 72 optional Mikroreflektoren 76 vorliegen oder transparente und/oder unstrukturierte Abschnitte 77 vorliegen.

Dass zwei transparente Abschnitte auch übereinander angeordnet sein können, um ein Durchsichtsmerkmal zu bilden, ist für sich genommen bekannt. Für weitere Details eines solchen Aufbaus kann auf DE 102018005447 verwiesen werden.

Die in getrennten Reliefstrukturen 71, 72 vorliegenden Reliefelemente der Mikroreflektoren 75, 76 können nun auch getrennt voneinander mit einer farbgebenden Beschichtung oder farbgebenden Zwischenschicht versehen werden. In einer ersten Variante wird die Zwischenschicht 78 oder die zweite Reliefschicht 74 als zweite farbgebende Schicht für die zweiten Mikroreflektoren 76 des zweiten Sicherheitsmerkmals verwendet. Optional können dabei die ersten Mikroreflektoren mit einer ersten lasierenden Schicht, mit unterschiedlicher Farbe, beschichtet werden. Die transparenten Abschnitte 77 der ersten Reliefstruktur 71 bleiben frei von der ersten Farbe. Sie könnten jedoch theoretisch auch mit beschichtet werden, falls das erste Motiv in einem Mischfarbton aus erster und zweiter Farbe sichtbar werden soll. In einer zweiten Variante wird über zumindest einer der (oder beiden) reflektionserhöhenden Beschichtungen der ersten oder zweiten Mikrospiegel 75, 76 eine (oder zwei unterschiedliche) lasierende Farbschicht aufgebracht. Die zweite Reliefstruktur 72 wird entsprechend zunächst farblich und dann reflektionserhöhend beschichtet.

In Aufsicht können mit allen Varianten nach Fig. 5 bis 8 beispielsweise wiederum die Anordnungen nach Fig. 3 oder 4 oder andere gewünschte Verschachtelungen und Beschichtungsraster erzielt werden. Ebenso ist es in allen Ausgestaltungen möglich dass die Reliefstruktur(en) oder die Teilreliefstruktur(en) Mikroreflektoren weiterer Sicherheitsmerkmale umfassen können. Selbstverständlich blickt der Betrachter weiterhin stets von oben auf die im Querschnitt dargestellten Sicherheitselemente.

Wie aus dem Vorstehenden bereits ableitbar ist, können auch sowohl eine farbgebende Beschichtung als auch eine farbgebende Struktur in einer Mikroreflektor-Anordnung, für unterschiedliche Sicherheitsmerkmale oder sogar für dasselbe Sicherheitsmerkmal, verwendet werden.

Fig. 8 zeigt noch einmal eine Ausgestaltung mit zwei Reliefstrukturen 81, 82 auf zwei Höhenstufen in einem Sicherheitselement 80. Erstmals figürlich dargestellt sind die weiteren Beschichtungen 831, 832, 841.

Eine erste Reliefschicht 83 mit der ersten Reliefstruktur 81 wird nur partiell vorgesehen. Auf der Reliefschicht 83 ist eine reflektionserhöhende Schicht 831 und eine lasierende Farbschicht 832 aufgebracht. Erste Mikroreflektoren 851 in einem Rasterbereich sind einheitlich in einer ersten Richtung ausgerichtet. Der Rasterbereich hat beispielsweise die Kontur des Buchstaben A. In dem Rasterbereich liegt ein Raster aus beschichteten Rasterelementen 858 und unbeschichteten Rasterzwischenräumen 857 vor. Die Rasterzwischenräume auf der ersten Reliefstruktur sind also transparent und die Rasterelemente im entsprechenden Kippwinkel farbig reflektierend. Das Motiv in Form des Buchstabens A sieht der Betrachter bei dem Kippwinkel als gerastertes A.

In diesem Beispiel sind dritte Mikroreflektoren 852 in einem weiteren Flächenbereich einheitlich in einer anderen Richtung ausgerichtet. Der weitere Flächenbereich hat beispielsweise die Kontur des Buchstaben B ist jedoch vollflächig beschichtet also nicht gerastert beschichtet.

Die Buchstaben A und B werden für den Betrachter kippwinkelabhängig in der Farbe der lasierenden Farbschicht 832, also beispielsweise grün, sichtbar.

Der Buchstabe A wird jedoch als erkennbar gerastertes Motiv sichtbar, während der Buchstabe B als vollflächiges Motiv erscheint.

Auf einer zweiten Reliefschicht 84 mit der zweiten Reliefstruktur 82 und den Reliefelementen der Mikroreflektoren 86 liegt die reflektionserhöhende Schicht 841. Eine farbgebende Schicht 88 ist hier als höhenausgleichende Schicht gestaltet. Alternativ sind auch eine separate Zwischenschicht oder eine nicht-höhenausgleichende Schicht (analog zur Farbschicht 832) als farbgebende Schicht einsetzbar. Durch die farbgebende Schicht 88 sieht der Betrachter das bewegte Motiv des zweiten Sicherheitsmerkmals, das durch die zweiten Mikroreflektoren 86, 861, 862 erzeugt wird, in einer anderen Farbe, beispielsweise in rot. Im Rasterbereich sieht der Betrachter das zweite Motiv wiederum als gerasteretes Motiv. Beispielsweise der Mikroreflektor 861 liegt unter einem transparenten Rasterzwischenraum 857 und kann somit zur Erzegung des zweiten Motivs beitragen. Außerhalb des Rasterbereichs könnte das zweite Motiv in einem Teilbereich verdeckt sein und/oder in mindestens einem Teilbereich(en) unbeeinflusst sichtbar sein. Beispielsweise wird das zweite Motiv durch die vollflächig beschichteten Mikroreflektoren 852 des Buchstaben B verdeckt. In einem anderen Teilbereich, wie der Lücke in der ersten Reliefschicht 83, ist das zweite Motiv frei sichtbar. In der Figur liegt nur der Mikroreflektor 862, als Repräsentant für solche Teilbereiche, unter der Lücke.

Fig. 9 zeigt ein weiteres Sicherheitselement 90 mit einer Mehrzahl an Motiven von Sicherheitsmerkmalen.

In einem Rasterbereich 95, der in der Form eines Fünfecks vorliegt, sind abwechselnd unbeschichtete Zwischenräumen 97 und beschichteten Rasterstreifen 98 als Beschichtungsraster angeordnet. Die Rasterstreifen 98 sind symmetrisch um ein Symbol oder Motiv, hier die Null eines statischen Motivs 93 in der Form der Zahl "100", angeordnet. Jeder Rasterstreifen 98 hat ebenfalls die Form des Symbol, also einer Null. Da die Rasterstreifen für den Betrachter erkennbar sind, wird das Symbol doppelt hervorgehoben. Es liegt zentral und wiederholt sich in den Rasterelementen.

In diesem Beispiel soll der Rasterbereich 95, also das Motiv Fünfeck, für den Betrachter als gerastertes Fünfeck unter einem großen Kippwinkelbereich erkennbar sein. Beim Kippen entsteht optional eine motivinterne Bewegung, beispielsweise eines hellen Flecks (oder mehrerer heller Flecken) entlang des Rasterstreifens. Die Mikroreflektoren (bzw. -spiegel) des ersten Sicherheitselements, dessen Motiv das Fünfeck ist, sind beispielsweise jeweils einmal pro Pixel für das Motiv vorgesehen. Der helle Fleck im Motiv wird dann beispielsweise durch drei Mikroreflektoren pro Pixel erzielt, wobei Ort und Neigungswinkel der Mikroreflektoren (bzw. -spiegel) entsprechend lokal angepasst zu wählen ist, wie es für bewegte Motive an sich bereits hinreichend bekannt ist.

Ein zweites Sicherheitsmerkmal erzeugt ein bewegtes zweites Motiv 96. Das Motiv 96 bewegt sich beim Kippen um die vorgegebene Achse von einer gestrichelt dargestellten Anfangsposition 961 zu der gestrichelt dargestellten Endposition 962. An der Anfangs- und Endposition 961, 962 ergänzt sich das Motiv 96 jeweils mit einer statischen Referenzmarke 963, 964 zu einem Gesamtmotiv. Die Referenzmarken 963, 964 könnten beispielsweise scheinbar aus der Ebene des Sicherheitselement heraus gewölbte Motive sein. Wie sie mit Mikrospiegeln in für sich genommen bekannter Art erzeugt werden können. Das Motiv 96 ist für den Betrachter außerhalb des Rasterbereiches 95 beispielsweise entweder als vollflächiges Dreieck sichtbar oder nur mit seinen Konturlinien (den drei Seiten des Dreiecks) sichtbar. Im Rasterbereich 95 ist das bewegte Motiv 96 dagegen nur als gerastertes Dreieck sichtbar. Sofern beispielsweise in einer unteren Reliefstruktur überhaupt Mikroreflektoren des zweiten Sicherheitsmerkmals unter den Rasterstreifen vorliegen, wären sie dort im Wesentlichen verdeckt und primär die Mikroreflektoren des zweiten Sicherheitsmerkmals, die unter den Rasterzwischenräumen liegen, erzeugen das Motiv 96.

Ein drittes Sicherheitsmerkmal erzeugt beispielsweise ein nur in einem dritten Kippwinkelbereich sichtbares, dreidimensional wirkendes Motiv 94. Das Motiv in der Form einer Raute schwebt für den Betrachter über der Ebene des Sicherheitselements. Es liegt statisch vollständig innerhalb des ersten Motivs und vorzugsweise innerhalb eines Rasterstreifens.

Da die Mikrospiegel der ersten und zweiten Sicherheitsmerkmale, wiederum auf unterschiedlichen Höhenstufen bereitgestellt werden, können die Motive auch farblich unterschiedlich erscheinen. Weisen die höher liegenden Mikrospiegel eine gelbe lasierende Farbschicht und die tiefer liegenden Mikrospiegel eine blaue lasierende Farbschicht auf, ist das Motiv 96 außerhalb des Rasterbereichs blau (ungerastert) und das Motiv 95 des Rasterbereiches ist gelb gerastert. Im Rasterbereich erscheint das Motiv 96 blau gerastert vor dunklen Streifen, wenn der Kippwinkelbereich des Motivs 95 nicht mit dem Kippwinkelbereich des Motivs 96 überlappt. Im Falle eines Kippwinkels aus überlappenden Kippwinkelbereichen, wäre das Motiv 96 blau gerastert mit gelben (nicht-linearen) Streifen sichtbar.

### Bezugszeichenliste

- 1: Banknote
- 2: Sicherheitselement
- 5: erstes Sicherheitsmerkmal
- 6: zweites Sicherheitsmerkmal
- 8: Banknotensubstrat
- 20: Sicherheitselement
- 25: Motiv des ersten Sicherheitsmerkmals
- 26: Motiv des zweiten Sicherheitsmerkmals
- 27: Kippachse
- 28: Kipprichtung
- 29: Kippwinkel
- 250, 260: Betrachtungswinkelbereich
- 251, 261: Kippwinkeluntergrenze
- 252, 262: Kippwinkelobergrenze

- 32, 42: Mikrospiegelanordnung
- 33, 43: Rasterzwischenbereich
- 34, 44: Beschichtungsrasterelemente
- 38, 39, 48, 49: Pixel mit Mikroreflektoren
- 35, 45: Mikroreflektoren des ersten Sicherheitsmerkmals
- 36, 46: Mikroreflektoren des zweiten Sicherheitsmerkmals
- 37: Mikroreflektoren eines weiteren Sicherheitsmerkmals

- 50, 60, 70, 80: Sicherheitselement
- 51, 61: Reliefstruktur
- 67, 68: Teilreliefstruktur
- 71, 81: Erste Reliefstruktur
- 72, 82: Zweite Reliefstruktur
- 53, 63: Prägeschicht
- 73, 83: erste Prägeschicht
- 74, 84: zweite Prägeschicht

- 55, 65, 75, 851, 852: erste Mikrospiegel des ersten Sicherheitsmerkmals
- 56, 66, 76, 861, 862: zweite Mikrospiegel des zweiten Sicherheitsmerkmals

- 77: transparentes Element
- 78, 88: Zwischenschicht
- 59, 69: Trägerschicht

- 831, 841: Reflektionserhöhende Schicht
- 832: Lasierende Farbschicht
- 857: Unbeschichtetes Rasterzwischenelement
- 858: Beschichtungsrasterelement

- 90: Sicherheitselement
- 93: Statisches Motiv
- 94, 95, 96: Motiv eines Sicherheitsmerkmals
- 97: Rasterzwischenelement
- 98: Beschichtungsrasterelement

- 961, 962: Motivposition
- 963, 964: Ergänzungsmotiv

## Patentansprüche

1. Optisch variables Sicherheitselement (2), mit
- einer Mikroreflektor-Anordnung (32; 42), umfassend eine Vielzahl von gerichtet reflektierenden Mikroreflektoren (35,36; 45,46);
- Mikroreflektoren (35; 36; 46) eines Sicherheitsmerkmals sind derart unterschiedlich ausgerichtet, dass ein Motiv des Sicherheitsmerkmals (25; 26; 96) kippwinkelabhängig für den Betrachter reflektierend sichtbar ist;
- wobei in einem Rasterbereich Mikroreflektoren der Mikroreflektor-Anordnung mit einem Beschichtungsraster (37,38; 47,48) versehen sind,
die Rasterelemente (38; 48) des Beschichtungsrasters eine Rastergröße aufweisen, so dass die Rasterelemente (38; 48) für den Betrachter erkennbar sind, die Rasterelemente eine Rasterelementgröße zwischen 100µm und 3mm aufweisen,
wobei das Beschichtungsraster (37,38; 47,48) das Motiv des Sicherheitsmerkmals (25; 26; 94; 95; 96) als gerastertes Motiv in Erscheinung treten lässt.

2. Sicherheitselement nach Anspruch 1 **dadurch gekennzeichnet, dass** durch das Beschichtungsraster (37,38; 47,48) auch ein Motiv eines zweiten Sicherheitsmerkmals (26; 25; 96), welches durch die Ausrichtung von Mikroreflektoren (35; 36; 46) des zweiten Sicherheitsmerkmals erzeugt wird, in dem Rasterbereich für den Betrachter als gerastertes Motiv sichtbar ist.

3. Sicherheitselement nach Anspruch 1 oder 2 **dadurch gekennzeichnet, dass** das Motiv als bewegtes, erstes Motiv und/oder ein zweites, bewegtes Motiv außerhalb des Rasterbereiches mit einem eigenen Raster sichtbar sein ist, wobei das eigene Raster als Ausrichtungsraster - durch gerasterte Ausrichtung der Mikroreflektoren - gestaltet ist; vorzugsweise tritt dieses Motiv mit eigenem Raster in dem Rasterbereich als doppelt gerastertes Motiv in Erscheinung.

4. Sicherheitselement nach einem der Ansprüche 1 bis 3 **dadurch gekennzeichnet, dass** das Motiv als bewegtes, erstes Motiv und/oder ein bewegtes, zweites Motiv außerhalb des Rasterbereiches (95) ungerastert in Erscheinung tritt.

5. Sicherheitselement nach einem der Ansprüche 1 bis 4 **dadurch gekennzeichnet, dass** zumindest in dem Rasterbereich Mikroreflektoren (35; 45) eines zweiten Motivs eines zweiten Sicherheitsmerkmals (25; 95) mit den ersten Mikroreflektoren (36; 46) des ersten Sicherheitsmerkmals (26; 96) - in Aufsicht betrachtet - verschachtelt angeordnet sind.

6. Sicherheitselement nach einem der Ansprüche 1 bis 5 **dadurch gekennzeichnet, dass** in dem Rasterbereich Rasterlinien oder -streifen des Beschichtungsrasters mit zweiten Rasterlinien oder -streifen eines zweiten Rasters oder mit einer Konturlinie eines linienartigen ersten oder zweiten Motivs in einem Winkel zwischen 30 und 150 Grad kreuzen, vorzugsweise mit einem Winkel zwischen 60 und 120 Grad, weiter bevorzugt nicht genau senkrecht.

7. Sicherheitselement nach einem der Ansprüche 1 bis 6 **dadurch gekennzeichnet, dass**
das Motiv des ersten Sicherheitsmerkmals (26; 96) ein bewegtes Motiv ist, welches - kippwinkelabhängig gleichzeitig oder nacheinander - in dem Rasterbereich mit einem bewegten Motiv oder mit einem nur kippwinkelabhängig sichtbaren Motiv (94) eines zweiten Sicherheitsmerkmals sichtbar ist; oder
das Motiv des ersten Sicherheitsmerkmals ein statisches Motiv (25; 95) ist, welches - kippwinkelabhängig gleichzeitig oder nacheinander - in dem Rasterbereich mit einem bewegten Motiv (26; 96) oder mit einem nur kippwinkelabhängig sichtbaren Motiv (94) eines zweiten Sicherheitsmerkmals sichtbar ist.

8. Sicherheitselement nach einem der Ansprüche 1 bis 7, **dadurch gekennzeichnet, dass**
in dem Rasterbereich in jedem Rasterelement (38; 48) eine Vielzahl von Pixeln (39; 49) angeordnet sind, mit einer Pixelgröße die für den Betrachter nicht erkennbar ist und mit mindestens zwei Mikroreflektoren pro Pixel; und/oder
die Rasterelemente eine reflektionserhöhende, inbesondere opake, Schicht (831, 841) umfassen; und/oder Rasterelemente mit einer Rasterelementgröße zwischen 200 µm bis 1mm aufweist; und/oder
die Motive des ersten Sicherheitsmerkmal (5) und des zweiten Sicherheitsmerkmals (6) mit unterschiedlicher Farbwirkung in Erscheinung treten.

9. Sicherheitselement nach einem der Ansprüche 1 bis 8, **dadurch gekennzeichnet, dass** die Mikroreflektoren des ersten und zweiten Sicherheitsmerkmals (65,66; 75, 76; 851, 86) auf unterschiedlichen Höhenstufen vorliegen, wobei die Mikroreflektoren der oberen Höhenstufe die Rasterelemente des Beschichtungsrasters umfassen;
wobei vorzugsweise die Mikroreflektoren-Anordnung umfasst:
- zwei Teilreliefstrukturen (67, 68) auf unterschiedlichen Höhenstufen in einer Reliefstruktur (61), oder
- zwei eigenständige Reliefstrukturen (71, 72; 81, 82) auf unterschiedlichen Höhenstufen.

10. Sicherheitselement nach einem der Ansprüche 1 bis 9, **dadurch gekennzeichnet, dass**
über einer - insbesondere opaken - reflektionserhöhenden Schicht (831, 841) der Mikroreflektoren des ersten und/oder des zweiten Sicherheitsmerkmals (851,852,861, 862) eine entsprechende erste bzw. zweite farbgebende Schicht (78; 88; 832), insbesondere eine lasierende Farbschicht, vorliegt; und/oder
eine - insbesondere opake - reflektionserhöhende Schicht der Mikroreflektoren eine farbgebende Subwellenlängenstruktur umfasst und/ oder eine Eigenfarbe aufweist.

11. Sicherheitselement nach einem der Ansprüche 1 bis 10, **dadurch gekennzeichnet, dass** die Mikroreflektoren eine Größe zwischen 1 bis 60 µm aufweisen, bevorzugt 1 bis 30 µm aufweisen, und/oder die Mikroreflektoren jeweils gebildet sind durch einen Mikrospiegel mit einer gerichteten, vorzugsweise planen, Oberfläche, durch eine gerichtet reflektierende Fresnelstruktur, durch eine Beugungsstruktur oder durch eine Subwellenlängenstruktur.

12. Sicherheitselement nach einem der Ansprüche 1 bis 11, **dadurch gekennzeichnet, dass** das Motiv des ersten oder eines weiteren Sicherheitsmerkmals, das durch die Ausrichtung der Mikroreflektoren in der Mikroreflektoren-Anordnung erzeugt wird, eine motivinterne Bewegung umfasst, die vorzugsweise senkrecht zur Motivkontur verläuft.

13. Sicherheitselement nach einem der Ansprüche 1 bis 12, **dadurch gekennzeichnet, dass** das Beschichtungsraster ein
- lineares Raster (47, 48) ist, oder
- ein regelmäßiges Raster aus gleichartigen beschichteten Rasterelementen (38) ist, die bevorzugt als eigenes Rasterelement-Untermotiv erkennbar sind,
- ein regelmäßiges Raster aus beschichteten Rasterstreifen (98) ist, die eine gleichartige Außenkontur als Rasterstreifen-Untermotiv aufweisen.

14. Wertdokument mit einem Sicherheitselement nach einem der Ansprüche 1 bis 13, welches in ein Wertdokumentsubstrat eingebracht ist oder auf das Wertdokumentsubstrat aufgebracht ist.

## Claims

1. Optically variable security element (2), having
- a microreflector arrangement (32; 42), comprising a plurality of directionally reflective microreflectors (35,36; 45,46);
- microreflectors (35; 36; 46) of a security feature are aligned differently such that a motif of the security feature (25; 26; 96) is reflectively visible to the observer depending on the tilt angle;
- wherein in a pattern region microreflectors of the microreflector arrangement are provided with a coating pattern (37,38; 47,48),
the pattern elements (38; 48) of the coating pattern have a pattern size so that the pattern elements (38; 48) are discernible to the observer, and the pattern elements have a pattern element size of between 100 µm and 3 mm, wherein the coating pattern (37,38; 47,48) causes the motif of the security feature (25; 26; 94; 95; 96) to appear as a patterned motif.

2. Security element according to Claim 1, **characterized in that** by virtue of the coating pattern (37,38; 47,48) a motif of a second security feature (26; 25; 96), which is generated by the alignment of microreflectors (35; 36; 46) of the second security feature, is also visible to the observer as a patterned motif in the pattern region.

3. Security element according to Claim 1 or 2, **characterized in that** the motif is visible as a moving, first motif and/or a second, moving motif outside the pattern region with a dedicated pattern, wherein the dedicated pattern is designed as an alignment pattern - by patterned alignment of the microreflectors; preferably, this motif with a dedicated pattern appears as a doubly patterned motif in the pattern region.

4. Security element according to any of Claims 1 to 3, **characterized in that** the motif appears as a moving, first motif and/or a moving, second motif outside the pattern region (95) in unpatterned form.

5. Security element according to any of Claims 1 to 4, **characterized in that** at least in the pattern region microreflectors (35; 45) of a second motif of a second security feature (25; 95) are arranged in a manner interleaved with the first microreflectors (36; 46) of the first security feature (26; 96) - as observed in plan view.

6. Security element according to any of Claims 1 to 5, **characterized in that** in the pattern region pattern lines or strips of the coating pattern cross second pattern lines or strips of a second pattern or a contour line of a line-like first or second motif at an angle of between 30 and 150 degrees, preferably at an angle of between 60 and 120 degrees, with further preference not exactly perpendicularly.

7. Security element according to any of Claims 1 to 6, **characterized in that**
the motif of the first security feature (26; 96) is a moving motif which - depending on the tilt angle simultaneously or successively - is visible in the pattern region with a moving motif or with a motif (94) of a second security feature that is only visible depending on the tilt angle; or
the motif of the first security feature is a static motif (25; 95) which - depending on the tilt angle simultaneously or successively - is visible in the pattern region with a moving motif (26; 96) or with a motif (94) of a second security feature that is only visible depending on the tilt angle.

8. Security element according to any of Claims 1 to 7, **characterized in that**
in the pattern region in each pattern element (38; 48) a plurality of pixels (39; 49) are arranged, with a pixel size that is not discernible to the observer and with at least two microreflectors per pixel; and/or
the pattern elements comprise a reflection-enhancing, in particular opaque, layer (831, 841); and/or the pattern elements have a pattern element size of between 200 µm and 1 mm; and/or
the motifs of the first security feature (5) and of the second security feature (6) appear with different colour effects.

9. Security element according to any of Claims 1 to 8, **characterized in that** the microreflectors of the first and second security features (65,66; 75, 76; 851, 86) are present at different height levels, wherein the microreflectors of the upper height level comprise the pattern elements of the coating pattern;
wherein preferably the microreflector arrangement comprises:
- two partial relief structures (67, 68) at different height levels in a relief structure (61), or
- two independent relief structures (71, 72; 81, 82) at different height levels.

10. Security element according to any of Claims 1 to 9, **characterized in that**
above an - in particular opaque - reflection-enhancing layer (831, 841) of the microreflectors of the first and/or of the second security feature (851, 852, 861, 862) a corresponding first and/or respectively second colour-imparting layer (78; 88; 832), in particular a translucent colour layer, is present; and/or
an - in particular opaque - reflection-enhancing layer of the microreflectors comprises a colour-imparting subwavelength structure and/or has an inherent colour.

11. Security element according to any of Claims 1 to 10, **characterized in that** the microreflectors have a size of from 1 to 60 µm, preferably 1 to 30 µm, and/or the microreflectors are each formed by a micromirror having a directional, preferably plane, surface, by a directionally reflective Fresnel structure, by a diffraction structure or by a subwavelength structure.

12. Security element according to any of Claims 1 to 11, **characterized in that** the motif of the first or of a further security feature, which is generated by the alignment of the microreflectors in the microreflector arrangement, comprises a motif-internal movement, which preferably progresses perpendicularly to the motif contour.

13. Security element according to any of Claims 1 to 12, **characterized in that** the coating pattern is
- a linear pattern (47,48), or
- a regular pattern composed of coated pattern elements (38) of identical type, which are preferably discernible as a dedicated pattern element sub-motif,
- a regular pattern composed of coated pattern strips (98) having an outer contour of identical type as a pattern strip sub-motif.

14. Valuable document comprising a security element according to any of Claims 1 to 13, which is incorporated into a valuable document substrate or is applied to the valuable document substrate.

## Revendications

1. Élément de sécurité optiquement variable (2), comportant
- un agencement de microréflecteurs (32 ; 42), comprenant une pluralité de microréflecteurs (35, 36 ; 45, 46) à réflexion orientée ;
- des microréflecteurs (35 ; 36 ; 46) d'un élément de sécurité étant orientés de manière différente, de sorte qu'un motif de l'élément de sécurité (25 ; 26 ; 96) est visible par réflexion aux yeux de l'observateur en fonction de l'angle d'inclinaison ;
- des microréflecteurs de l'agencement de microréflecteurs étant pourvus d'une trame de revêtement (37, 38 ; 47, 48) dans une zone tramée,
les éléments de trame (38 ; 48) de la trame de revêtement présentant une taille de trame telle que les éléments de trame (38 ; 48) sont reconnaissables par l'observateur, les éléments de trame présentant une taille d'élément de trame comprise entre 100 µm et 3 mm,
la trame de revêtement (37, 38 ; 47, 48) laissant apparaître le motif de l'élément de sécurité (25 ; 26 ; 94 ; 95 ; 96) sous la forme d'un motif tramé.

2. Élément de sécurité selon la revendication 1, **caractérisé en ce qu'**à travers la trame de revêtement (37,38 ; 47,48), un motif d'un deuxième élément de sécurité (26 ; 25 ; 96), lequel est généré par l'orientation des microréflecteurs (35 ; 36 ; 46) du deuxième élément de sécurité, est également visible aux yeux de l'observateur sous la forme d'un motif tramé dans la zone tramée.

3. Élément de sécurité selon la revendication 1 ou 2, **caractérisé en ce que** le motif est visible sous la forme d'un premier motif mobile et/ou d'un deuxième motif mobile en dehors de la zone tramée avec sa propre trame, ladite propre trame étant conçue sous forme de trame d'orientation - par l'orientation tramée des microréflecteurs ; ce motif, avec sa propre trame, apparaissant de préférence dans la zone tramée sous la forme d'un motif doublement tramé.

4. Élément de sécurité selon l'une quelconque des revendications 1 à 3, **caractérisé en ce que** le motif apparaît sous la forme d'un premier motif mobile et/ou d'un deuxième motif mobile non tramé en dehors de la zone tramée (95).

5. Élément de sécurité selon l'une quelconque des revendications 1 à 4, **caractérisé en ce qu'**au moins dans la zone tramée, les microréflecteurs (35 ; 45) d'un deuxième motif d'un deuxième élément de sécurité (25 ; 95) sont agencés - dans une vue en plan - de manière entrelacée avec les premiers microréflecteurs (36 ; 46) du premier élément de sécurité (26 ; 96).

6. Élément de sécurité selon l'une quelconque des revendications 1 à 5, **caractérisé en ce que**, dans la zone tramée, des lignes de trame ou des bandes de trame de la trame de revêtement croisent des deuxièmes lignes de trame ou bandes de trame d'une deuxième trame, ou une ligne de contour d'un premier ou deuxième motif de type linéaire selon un angle compris entre 30 et 150 degrés, de préférence un angle compris entre 60 et 120 degrés, encore plus préférablement non exactement perpendiculaire.

7. Élément de sécurité selon l'une quelconque des revendications 1 à 6, **caractérisé en ce que**
le motif du premier élément de sécurité (26 ; 96) est un motif mobile, lequel est visible - en fonction de l'angle d'inclinaison simultanément ou séquentiellement - dans la zone tramée avec un motif mobile ou avec un motif (94) d'un deuxième élément de sécurité visible uniquement en fonction de l'angle d'inclinaison ; ou
le motif du premier élément de sécurité est un motif statique (25 ; 95), lequel est visible - en fonction de l'angle d'inclinaison simultanément ou séquentiellement - dans la zone tramée avec un motif mobile (26 ; 96) ou avec un motif (94) d'un deuxième élément de sécurité visible uniquement en fonction de l'angle d'inclinaison.

8. Élément de sécurité selon l'une quelconque des revendications 1 à 7, **caractérisé en ce que**
dans la zone tramée, une pluralité de pixels (39 ; 49) sont agencés dans chaque élément de trame (38 ; 48), avec une taille de pixel non reconnaissable pour l'observateur et avec au moins deux microréflecteurs par pixel ; et/ou les éléments de trame comprennent une couche augmentant la réflexion, en particulier opaque (831, 841) ; et/ou les éléments de trame ont une taille d'élément de trame comprise entre 200 µm et 1 mm ; et/ou
les motifs du premier élément de sécurité (5) et du deuxième élément de sécurité (6) apparaissent avec un effet de couleur différent.

9. Élément de sécurité selon l'une quelconque des revendications 1 à 8, **caractérisé en ce que** les microréflecteurs du premier et du deuxième élément de sécurité (65,66 ; 75, 76 ; 851, 86) sont présents à différentes niveaux de hauteur, les microréflecteurs du niveau de hauteur supérieur comprenant les éléments de trame de la trame de revêtement ;
l'agencement de microréflecteurs comprenant de préférence :
- deux sous-structures de relief (67, 68) à différents niveaux de hauteur dans une structure de relief (61), ou
- deux structures de relief autonomes (71, 72 ; 81, 82) à différents niveaux de hauteur.

10. Élément de sécurité selon l'une quelconque des revendications 1 à 9, **caractérisé en ce que**
une première et/ou une deuxième couche colorante (78 ; 88 ; 832) correspondante, en particulier une couche colorante translucide, est présente au-dessus d'une couche augmentant la réflexion - notamment opaque - (831, 841) des microréflecteurs du premier et/ou du deuxième élément de sécurité (851,852,861, 862) ; et/ou
une couche augmentant la réflexion - notamment opaque - des microréflecteurs comprend une structure à longueur d'onde secondaire colorante et/ou présente une couleur propre.

11. Élément de sécurité selon l'une quelconque des revendications 1 à 10, **caractérisé en ce que** les microréflecteurs présentent une taille comprise entre 1 et 60 µm, de préférence entre 1 et 30 µm, et/ou les microréflecteurs sont respectivement formés par un micromiroir ayant une surface orientée, de préférence plane, par une structure de Fresnel à réflexion orientée, par une structure de diffraction ou par une structure à longueur d'onde secondaire.

12. Élément de sécurité selon l'une quelconque des revendications 1 à 11, **caractérisé en ce que** le motif du premier ou d'un autre élément de sécurité, qui est généré par l'orientation des microréflecteurs dans l'agencement de microréflecteurs, comprend un mouvement interne au motif, lequel s'étend de préférence perpendiculairement au contour du motif.

13. Élément de sécurité selon l'une quelconque des revendications 1 à 12, **caractérisé en ce que** la trame de revêtement est
- une trame linéaire (47,48), ou
- une trame régulière d'éléments de trame (38) revêtus d'un même type de revêtement, qui sont de préférence reconnaissables sous la forme d'un sous-motif d'éléments de trame propre,
- une trame régulière de bandes de trame revêtues (98) qui présentent un contour externe de même type sous la forme d'un sous-motif de bandes de trame.

14. Document de valeur comportant un élément de sécurité selon l'une quelconque des revendications 1 à 13, lequel est incorporé à un substrat de document de valeur ou est appliqué sur le substrat de document de valeur.
